# EUROPÄISCHE PATENTSCHRIFT

(11) **EP 2 501 562 B1**
(45) Veröffentlichungstag und Bekanntmachung des Hinweises auf die Patenterteilung: **24.07.2013**
(21) Anmeldenummer: 10754321.7
(22) Anmeldetag: 14.09.2010
(51) Int. Cl.: B60C 11/16

(54) **LAUFSTREIFENPROFIL EINES FAHRZEUGLUFTREIFENS**
TREAD PROFILE OF A PNEUMATIC VEHICLE TIRE
SCULPTURE DE BANDE DE ROULEMENT D'UN PNEUMATIQUE DE VÉHICULE

(30) Priorität: 16.11.2009 DE 102009044547
(43) Veröffentlichungstag der Anmeldung: 26.09.2012
(73) Patentinhaber: Continental Reifen Deutschland GmbH, 30165 Hannover (DE)
(72) Erfinder: SCHLITTENHARD, Jan, 30900 Wedemark (DE); KENDZIORRA, Norbert, 30827 Garbsen (DE)
(74) Vertreter: Finger, Karsten
(86) Internationale Anmeldenummer: PCT/EP2010/063417
(87) Internationale Veröffentlichungsnummer: WO 2011/057834

(56) Entgegenhaltungen:
- EP-A1- 0 518 539
- WO-A1-2009/147047
- GB-A- 191 029 872

## Beschreibung

Die Erfindung betrifft ein Laufstreifenprofil eines Fahrzeugluftreifens mit mehreren durch Rillen oder Nuten voneinander beabstandeten radial erhabenen Profilelementen, die jeweils in radialer Richtung R nach außen durch eine die Bodenkontaktfläche bildende Mantelfläche begrenzt sind, wobei in wenigstens einem Profilelement wenigstens ein Spike ausgebildet ist, der mit seinem Spikekörper im Gummimaterial des Profilelementes verankert ist und mit einer Spikespitze ausgebildet ist, die sich in radialer Richtung R des Reifens aus dem Spikekörper heraus erstreckt und in radialer Position außerhalb der das Profilelement nach radial außen begrenzenden, die Bodenkontaktoberfläche bildenden Mantelfläche des Profilelementes endet.

Derartige Fahrzeugreifen sind bekannt. Bei konventionellen Fahrzeugluftreifen mit Spikes, werden die Spikes an dafür vorgesehene Positionen in den Profilblöcken eingebracht. Hierzu werden im Profilblockelement Spikelöcher ausgeformt, in die jeweils ein Spike eingesetzt wird. Zur Sicherstellung des Spikesitzes werden dabei im Umfeld um den Spike keine Feineinschnitte ausgebildet.

Die allgemeine Wirkungsweise von Spikereifen auf Eis beruht auf mehreren Effekten. Zum einen dringt der Spikepin des Spikes das Eis in der Fahrbahn ein und verzahnt sich dort mechanisch. Beim Brems- bzw. Traktionsvorgang treten darüber hinaus Relativbewegungen (Schlupf) zwischen Reifen und eisbedeckter Fahrbahn auf. Diese bewirken, dass der Spike durch das Eis gezogen wird und dabei eine Rinne in der Eisoberfläche fräst. Bei diesem spanabhebenden Verfahren wird Eis der Oberfläche zerstört. Bei der Zerstörung des Eises wird Energie durch die Bildung neuer Oberflächen umgewandelt. Diese Energieumwandlung wird z.B. in der Verkürzung des Bremsweges wahrgenommen. Das zerstörte Eis nimmt jedoch ein größeres Volumen ein als das kompakte Eis der Fahrbahn. Außerdem muss das zerstörte Eis dem Spikepin beim Schlupfvorgang ausweichen, d.h. es muss zumindest zeitweise transportiert werden. Zusätzlich wirkt auch beim Spikereifen die Reibung zwischen dem den Spikepin umgebenden Gummimaterial und der Eisoberfläche.

Bei Eis-, Brems- und Traktionstests des Anmelders hat sich jedoch gezeigt, dass der Umlagerungs-, d.h. der Transportvorgang des abgespanten Eises häufig nicht vollständig abläuft und sich das zerstörte Eis zum Teil um den Spike herum unter diesem Profilblock ansammelt und nicht an die die Profilblockelemente begrenzenden Profilrillen abgegeben wird. Dies kann zur Folge haben, dass der Spike nicht in gewünschter Weise die oben genannten Wirkungen vollständig umsetzen kann. Das um den Spike abgelagerte Eismaterial drückt das den Spike umgebende Gummimaterial zusammen mit dem Spike beim Durchlaufen des Reifenlatsches nach radial innen in Richtung Reifen und von der Straßenoberfläche weg, so dass sowohl das den Spike umgebende Gummimaterial als auch die zum Eisgriff wichtigen Kanten des Spikepins durch das abgekratzte Eismaterial von der Straßenoberfläche weggedrückt werden. Dies reduziert die Eingriffswirkung des Spikes und somit die mechanische Verzahnung des Spikes mit dem Eis sowie die Zerspanungswirkung des Spikes beim Bremsen und bei Traktion. Darüber hinaus wird auch die Gummi-Eis-Reibung im Umfeld des Spikes reduziert.

Aus der EP 0518539 A1 ist bekannt, einen Spikepin aus Hartgummi herzustellen und diesen in einem Laufstreifenprofil eines Reifens einzusetzen. Dabei wird der Spike so tief im Reifen montiert, dass der Spikepin entweder bündig mit der umgebenen Reifenoberfläche abschließt oder in einer Position radial innerhalb des umgebenen Reifenoberflächenmaterials endet. Damit der Spikepin beim Durchwalken des Reifens überhaupt Griffwirkung entfalten kann, wird oberhalb des Spikekörpers ein Spalt zwischen Spikepin und Laufstreifengummimaterial belassen, der die Kühlung und Aushärtung des Gummispikepins ermöglichen soll.

Der Erfindung liegt die Aufgabe zugrunde, bei einem derartigen Laufstreifenprofil einen verbesserten Eisgriff zu ermöglichen.

Erfindungsgemäß gelöst wird die Aufgabe durch die Ausbildung eines Laufstreifenprofils eines Fahrzeugluftreifens mit mehreren durch Rillen oder Nuten voneinander beabstandeten radial erhabenen Profilelementen, die jeweils in radialer Richtung R nach außen durch eine die Bodenkontaktfläche bildende Mantelfläche begrenzt sind, wobei in wenigstens einem Profilelement wenigstens ein Spike ausgebildet ist, der mit seinem Spikekörper im Gummimaterial des Profilelementes verankert ist und mit einer Spikespitze ausgebildet ist, die sich in radialer Richtung R des Reifens aus dem Spikekörper heraus erstreckt und in radialer Position außerhalb der das Profilelement nach radial außen begrenzenden, die Bodenkontaktoberfläche bildenden Mantelfläche des Profilelementes endet, gemäß den Merkmalen von Anspruch 1, bei dem in der das Profilelement nach radial außen begrenzenden, die Bodenkontaktoberfläche bildenden Mantelfläche eine Vertiefung zur Aufnahme von Eis ausgebildet ist, die den Spike im Wesentlichen ringförmig umschließt.

Die den Spike umgebende Vertiefung bildet ein Aufnahmereservoir zur Aufnahme des abgespanten Eises. Das abgespante Eis wird beim Durchrollen des Reifenlatsches im Reservoir aufgenommen. Ein Abheben des Gummimaterials beim Durchlaufen des Reifenlatsches von der Straßenoberfläche kann somit weitgehend verhindert werden. Der Spikepin bleibt im sicheren Eingriff mit der vereisten Straßenoberfläche, wodurch die Griffwirkung erhöht und bei Brems- und Traktionsvorgängen der Zerspanungseffekt aufrecht erhalten bleibt. Das außerhalb der Vertiefung ausgebildete Gummimaterial bleibt in sicherem Gummi-Eis-Reibungs-Kontakt.

Besonders vorteilhaft ist die Ausbildung eines Laufstreifenprofils gemäß den Merkmalen von Anspruch 2, wobei die Vertiefung in der Mantelfläche mit einer die Vertiefung zu der von Spike wegweisenden Seite begrenzenden Außenkonturlinie und auf der zum Spike hinweisenden Seite durch den Spike begrenzt ist. Durch diese Wahl der Begrenzung wird für abgespantes Eis direkt neben dem Spike eine Aufnahmemöglichkeit geschaffen, ohne dass das den Spike umgebende Gummimaterial von der Eisoberfläche abgehoben und der Spikepin aus dem intensiven Eiskontakt herausgehoben wird. Eine klar umgrenzte Aussenkonturlinie in der Mantelfläche führt zu einer Ausbildung eines Kanteneffekts mit einer Druckspitze, wodurch ein Unterwandern der Reifen-Eiskontaktfläche mit abgespantem Eismaterial verhindert werden kann. Hierdurch kann eine Reduktion der Gummi-Eis-Reibung vermieden werden.

Besonders vorteilhaft ist die Ausbildung eines Laufstreifenprofils gemäß den Merkmalen von Anspruch 3, wobei der Spikekörper eine zylinderförmige Mantelfläche mit einem senkrecht zur Zylinderachse ausgebildeten Querschnitt seiner Mantelfläche aufweist, welcher mit einem maximalen Außendurchmesser D mit 5,5mm≤ D≤ 7,5mm ausgebildet ist, wobei der Spikekörper insbesondere eine kreiszylinderförmige Mantelfläche aufweist. Eine solche Auslegung der Spikekörpergeometrie ermöglicht eine individuelle Optimierung des Zielkonfliktes zwischen Spikeeisgriffwirkung und Abriebsverhalten.

Besonders vorteilhaft ist die Ausbildung eines Laufstreifenprofils gemäß den Merkmalen von Anspruch 4, wobei die Vertiefung in der Mantelfläche eine in radialer Richtung R₁ zur Spikeachse S gemessene Breite F aufweist, die über ihre Erstreckung über den Umfang des Spikes hinweg mit 2mm≤F≤10mm ausgebildet ist. Diese Auslegung ermöglicht eine optimale Größengestaltung der Vertiefung, die in der Lage ist, die sich beim Schlupfvorgang bildenden Eisspäne aufzunehmen. Die Ausbildung ist klein genug um die für die Eisreibung zur Verfügung stehende Gummifläche zu gewährleisten und groß genug um die erfindungsgemäße Wirkung sicher zu stellen.

Besonders vorteilhaft ist die Ausbildung eines Laufstreifenprofils gemäß den Merkmalen von Anspruch 5, wobei die Vertiefung mit einer in radialer Richtung R des Reifens von der Mantelfläche bis zum Vertiefungsgrund gemessene Tiefe T mit 0,5mm≤T≤1mm ausgebildet ist. Eine Auslegung dieser Art bewirkt einen optimalen Kompromiss zwischen Bildung eines Eisspanreservoirs und einer ausreichenden Stützwirkung für den Spike unter Belastung, um eine optimale Eisgriffwirkung zu gewährleisten.

Besonders vorteilhaft ist die Ausbildung eines Laufstreifenprofils gemäß den Merkmalen von Anspruch 6, wobei die Tiefe T der Vertiefung in radialer Richtung R₁ zur Spikeachse stetig -insbesondere linear - zunehmend ausgebildet ist. Dies bewirkt eine verstärkte Unterstützung des Spikes in der direkten Spikeumgebung in Kombination mit einer Abriebsschutzwirkung des Spikekörpers vor Sand und Steinchen, wobei eine Bildung des Eisspanreservoirs sichergestellt ist.

Besonders vorteilhaft ist die Ausbildung eines Laufstreifenprofils gemäß den Merkmalen von Anspruch 7, wobei die Vertiefung in der Mantelfläche mit einer die Vertiefung zu der von Spike wegweisenden Seite begrenzenden Außenkonturlinie mit gekrümmtem Verlauf ausgebildet ist. Soweit ein nicht ganz ins Eis eindringt, bewirkt er ein Abheben des Gummimaterials in seiner direkten Umgebung. Der gekrümmte Verlauf der Vertiefung folgt in natürlicherweise diesem Umstand, wobei der auftretende Kanteneffekt ein Unterwandern der Reifen-Eiskontaktfläche mit Eispartikeln unterbinden kann.

Besonders vorteilhaft ist die Ausbildung eines Laufstreifenprofils gemäß den Merkmalen von Anspruch 8, wobei die Außenkonturlinie kreisförmig, oval oder elliptisch ausgebildet ist. Diese Auslegung ermöglicht eine optimierte Anpassung an die individuell besondern Anforderungen insbesondere bei Spikes mit Spikekörpern mit nicht kreisrunden zylindrischen Mantelflächen und bei Spikes mit Spikepins mit nicht kreisrunden Körpergeometrien.

Besonders vorteilhaft ist die Ausbildung eines Laufstreifenprofils gemäß den Merkmalen von Anspruch 9, wobei die Vertiefung in der Mantelfläche mit einer die Vertiefung zu der von Spike wegweisenden Seite begrenzenden Außenkonturlinie mit polygonalem - insbesondere mit sternförmig gezacktem - Verlauf ausgebildet ist. Diese Auslegung ermöglicht eine optimierte Anpassung an die individuell besondem Anforderungen insbesondere bei Spikes mit Spikekörpern mit stark von der kreisrunden zylindrischen Form der Mantelflächen und bei Spikes mit Spikepins mit stark von der kreisrunden zylindrischen Form der Körpergeometrien abweichenden Geometrien.

Besonders vorteilhaft ist die Ausbildung eines Laufstreifenprofils gemäß den Merkmalen von Anspruch 10, wobei in der das Profilelement nach radial außen begrenzenden Mantelfläche zusätzlich ein oder mehr kanalförmige Vertiefungen mit einer Breite B_{K} mit 1mm≤ B_{K} ≤ 5mm und mit einer - insbesondere konstanten - Tiefe T_{K} mit 0,5mm≤T_{K}≤1,5mm ausgebildet sind, die von einer Position außerhalb der den Spike ringförmig umschließenden Vertiefung in Richtung zu der den Spike ringförmig umschließenden Vertiefung ausgerichtet verlaufend bis zu der den Spike ringförmig umschließende Vertiefung erstreckt ausgebildet sind. Diese kanalförmigen Vertiefungen ermöglichen es besonders bei langen Schlupfbewegungen (z.B bei Bremsen / Traktion ohne ABS bzw. Traktionskontrolle) eine sichere Ausschleusung der Eispartikel aus dem Reservoir unter dem Profilblock heraus in die nächste Quernut gewährleisten und somit einen optimierten Spikeeingriff sicher zu stellen.

Besonders vorteilhaft ist die Ausbildung eines Laufstreifenprofils gemäß den Merkmalen von Anspruch 11, wobei das zwischen zwei benachbarten kanalförmigen Vertiefungen begrenzte Gummimaterial, das sich in radialer Richtung R des Reifens bis zur Mantelfläche erstreckt, in einer in die den Spike ringförmig umschließende Vertiefung reichende Verlängerung eine radial aus dem Vertiefungsgrund erhabene Rippe bildet, die sich bis zum Spike erstreckt und diesen - insbesondere in Umfangsrichtung U des Reifens - abstützt. Dies ermöglicht eine sichere Stützwirkung des Spikes. Ein Herauskippen des Spikes unter Belastung aus seinem optimalen Spikeeingriffswinkel kann hierdurch erschwert werden. Der Eisgriff kann somit weiter verbessert werden.

Besonders vorteilhaft ist die Ausbildung eines Laufstreifenprofils gemäß den Merkmalen von Anspruch 12, wobei auf der Mantelfläche unmittelbar benachbart zur Vertiefung entlang der Außenkonturlinie eine nach radial außen erstreckte Dichtlippe ausgebildet ist. Hierdurch kann der natürliche Kanteneffekt der Vertiefung erhöht und somit noch besser eine Unterwanderung der Reifen-Eiskontaktfläche mit dem zerspanten Eispartikel verhindert werden.

Besonders vorteilhaft ist die Ausbildung eines Laufstreifenprofils gemäß den Merkmalen von Anspruch 13, wobei auf der Mantelfläche in der radial aus dem Vertiefungsgrund der erhabene Rippe jeweils unmittelbar benachbart zur angrenzenden Vertiefung - und insbesondere in Verlängerung auch zu der begrenzenden kanalförmigen Vertiefung - entlang der Erstreckung der Rippe eine nach radial außen erstreckte Dichtlippe ausgebildet ist. Hierdurch kann ein Heraustreten der abgespanten Eispartikel aus den kanalförmigen Vertiefungen heraus verhindert und somit eine Unterwanderung der Reifen-Eiskontaktfläche weiter vermieden werden, wodurch eine große Gummi-Eisreibungs-Kontaktfläche und eine gute Eisperformance sichergestellt werden kann.

Die Erfindung wird im Folgenden an Hand der in den Figuren 1 bis 7 dargestellten Ausführungsbeispiele näher erläutert. Hierin zeigen
- Fig. 1: eine Draufsicht auf ein Profilblockelement eines Laufstreifenprofils eines Fahrzeugluftreifens mit montiertem Spike,
- Fig. 2: das Profilblockelement von Fig.1 in Schnittdarstellung gemäß Schnitt II-II von Fig.1,
- Fig. 3: das Profilblockelement von Fig. 1 in Schnittdarstellung gemäß Schnitt III-III von Fig. 1,
- Fig. 4a: bis Fig. 4d: Unterschiedliche alternative Außenkonturen der in einem Profilblockelement der Figuren 1 bis 3 ausgebildeten, den Spike umschließenden Vertiefung,
- Fig. 5a: ein Draufsicht auf ein Profilblockelement gemäß Fig.1 mit einer den Spike umschließenden Vertiefung mit kreisförmiger Außenkonturlinie,
- Fig. 5b: einen Querschnitt durch dieses Profilblockelement gemäß Schnitt Vb-Vb von Fig.5a und
- Fig. 5c: einen Querschnitt einer Ausführungsform der Vertiefung gemäß Schnitt Vc-Vc von Fig.5a,
- Fig. 6: vereinfachte Draufsicht auf ein Profilblockelement gemäß Darstellung von Fig.1 zur Erläuterung einer Ausführung mit alternativ ausgebildeten Ableitkanälen,
- Fig. 7: Draufsicht auf das Laufstreifenprofil eines Spikereifens mit gemäß den Fig. 1 bis Fig.3 ausgebildeten Spikes und Vertiefungen.

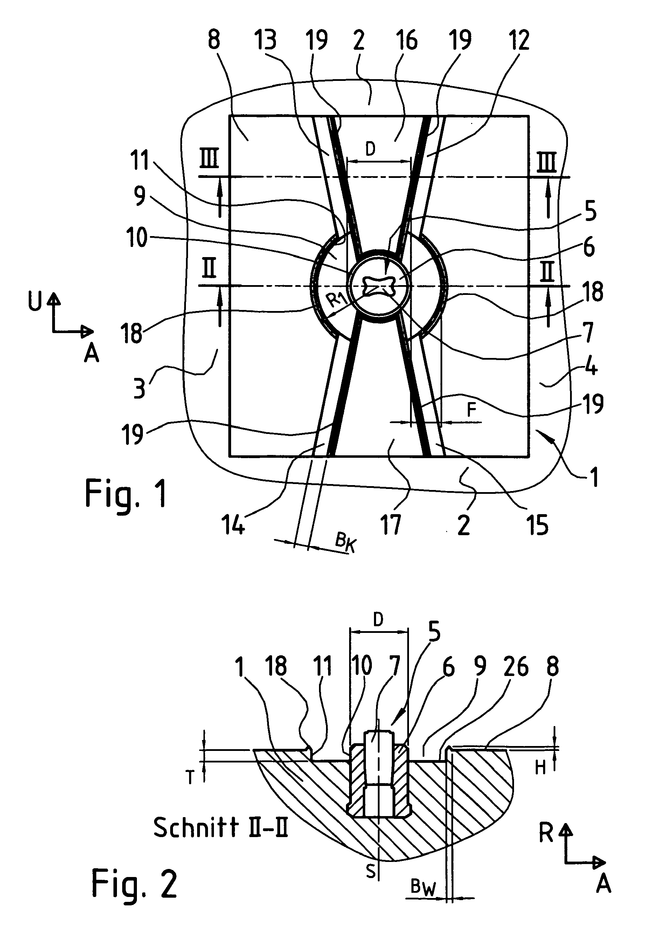

Die Figuren 1 bis 3 zeigen ein Profilblockelement 1 eines Laufstreifenprofils eines Fahrzeugluftreifens für Pkw-Fahrzeuge, welches in bekannter Weise in Umfangsrichtung U des Fahrzeugluftreifens jeweils durch eine dem Profilblockelement 1 vor- und eine dem Profilblockelement 1 nachgeordnete Querrille 2 und in axialer Richtung A des Fahrzeugluftreifens zu beiden axialen Seiten hin jeweils durch eine Umfangsrille 3 bzw. eine Umfangsrille 4 begrenzt ist. Das Profilblockelement 1 ist in radialer Richtung R des Fahrzeugluftreifens mit einer die Mantelfläche des Fahrzeugluftreifens bildenden Oberfläche 8, welche die Bodenkontaktfläche bildet, begrenzt.

Im Profilblockelement 1 ist in einem Spikeloch ein Spike 5 mit einem Spikekörper 6, der eine zylindrische Mantelfläche aufweist, und mit einem Spikestift 7 befestigt. Der Spikekörper 6 erstreckt sich in radialer Richtung nach außen bis zu der die Mantelfläche 8 bildenden Oberfläche des Profilblockelementes 1. Der in dem Spikekörper 6 befestigte Spikestift 7 erstreckt sich in radialer Richtung R des Fahrzeugluftreifens durch den Spikekörper 6 hindurch und bis in eine Position radial außerhalb der Mantelfläche 8.

Der Spikekörper 6 ist mit einem Außendurchmesser D mit 5,5mm ≤ D ≤ 7,5mm ausgebildet. Um den Spikekörper 6 herum ist in der radial äußeren Mantelfläche 8 des Profilblockelementes eine ringförmige Vertiefung 9 ausgebildet, die auf der zum Spike 5 hinweisenden Seite von der Mantelfläche 10 des Spikes 5 und auf der vom Spike 5 wegeweisenden Seite von einer die Außenkonturlinie 11 der Vertiefung 9 bildenden Wand der Vertiefung begrenzt ist. Die ein Aufnahmereservoir für abgekratztes Eis bildende Vertiefung 9 erstreckt sich über den Umfang des Spikes 5.

In einem - in den Figuren 1 bis 3 dargestellten - Ausführungsbeispiel sind in der Mantelfläche 8 des Profilblockelementes 1 zwei von der einen Querrille 2 ausgehende, geradlinig in Richtung Spike 5 verlaufende und bis zur Vertiefung 9 erstreckte Leitkanäle 12 und 13 ausgebildet. Ebenso sind in der Mantelfläche 8 des Profilblockelementes 1 von der anderen Querrille 2 ausgehend zwei jeweils in Richtung Spike 5 geradlinig verlaufende und bis zur Vertiefung 9 erstreckte Leitkanäle 14 und 15 ausgebildet. Die Leitkanäle 12, 13, 14 und 15 sind jeweils mit gleicher und über ihren jeweiligen Erstreckungsverlauf konstanter Breite B_{K} mit 1mm ≤ B_{K}≤ 5mm - beispielsweise B_{K} mit 1mm ≤ B_{K} ≤ 5mm - und mit gleicher über den gesamten Verlauf ausgebildeten konstanten in radialer Richtung gemessenen Tiefe T_{K} mit 0,5 mm ≤ T_{K} ≤ 1,5mm ausgebildet. In einem Ausführungsbeispiel ist die Breite B_{K} mit B_{K} = 1,5mm und die Tiefe T_{K} mit T_{K} = 0,8mm ausgebildet.

Die Figuren 1 bis 3 zeigen ein weiteres Ausführungsbeispiel, bei dem das zwischen den beiden Leitkanälen 12 und 13 und das zwischen den beiden Leitkanälen 14 und 15 jeweils ausgebildete Gummimaterial des Profilblockelementes 1, welches in radialer Richtung R nach außen durch die Mantelfläche 8 begrenzt ist, durch die Vertiefung 9 hindurch bis zum Spikekörper 6 erstreckt ausgebildet ist und eine den Spikekörper 6 und somit den Spike 5 in Umfangsrichtung U des Fahrzeugluftreifens versteifende Versteifungsrippe 16 bzw. 17 bildet. In diesem Fall unterteilen die beiden schmalen Versteifungsrippen 16 und 17 die ringförmige Vertiefung 9 in Umfangssegmente der Vertiefung 9. Die Versteifungsrippe 16 und die Versteifungsrippe 17 sind - wie in der Fig. 1 zu erkennen ist - ausgehend von der jeweiligen Querrille 2 in Richtung Spike 5 mit sich verjüngender in axialer Richtung A des Fahrzeugluftreifens gemessener Breite ausgebildet.

In den oben genannten Ausführungsbeispielen ist die Vertiefung 9 mit einer über ihren gesamten Erstreckungsbereich in radialer Richtung R₁ zur Spikeachse S und über ihren gesamten Umfangserstreckungsbereich um die Spikeachse S mit einer konstanten, ausgehend von der Mantelfläche 8 in radialer Richtung R des Fahrzeugluftreifens gemessenen Tiefe T ausgebildet mit 0,5mm ≤ T ≤ 1mm - beispielsweise mit T = 0,5mm-.

Die Figuren 1 bis 3 zeigen ein weiteres Ausführungsbeispiel, bei dem an der nach radial außen weisenden die Bodenkontaktfläche bildenden Mantelfläche 8 entlang der Außenkonturlinie 11 der Vertiefung 9 zwischen den Leitkanälen 13 und 14 und zwischen den Leitkanälen 12 und 15 jeweils unmittelbar benachbart zur Außenkonturlinie 11 eine aus der die Bodenkontaktoberfläche bildenden Mantelfläche 8 nach radial außen gerichteten Dichtlippe 18 ausgebildet ist. Den Figuren 1 bis 3 ist darüber hinaus ein Ausführungsbeispiel zu entnehmen, bei der zusätzlich jeweils die Versteifungsrippe 16 und die Versteifungsrippe 17 entlang ihrer jeweils zum Leitkanal 13 und 12 bzw. 14 und 15 weisenden Flanke an der nach radial außen weisenden die Bodenkontaktfläche bildenden Mantelfläche 8 mit einer aus der die Bodenkontaktoberfläche bildenden Mantelfläche 8 nach radial außen gerichteten Dichtlippe 19 ausgebildet ist, die sich jeweils unmittelbar benachbart zu dem die jeweilige Rippe 16 bzw. 17 begrenzenden Leitkanal 12, 13 bzw. 14, 15 und längs der Erstreckungsrichtung des jeweiligen Leitkanal 12, 13 bzw. 14, 15 zwischen Querrille 2 und Spike 5 erstreckt. Die Dichtlippen 18 bzw. 19 sind mit einer von der radial äußeren die Bodenkontaktfläche bildenden Mantelfläche nach radial außen gemessenen Erstreckungshöhe H und mit einer jeweils quer zur Erstreckungsrichtung der jeweiligen Dichtlippe 18 bzw. 19 gemessenen maximalen Breite B_{w} an der die radial äußeren Oberfläche bildenden Mantelfläche 8 ausgebildet und weisen im Querschnitt zur Erstreckungsrichtung der jeweiligen Dichtlippe 18 bzw. 19 - wie in Fig. 2 am Beispiel der Dichtlippe 18 zu erkennen ist - eine V-förmige Querschnittskontur auf, wobei die Spitze der V-Form die jeweilige Dichtlippe 18 bzw. 19 nach radial außen hin begrenzt. Die Höhe H und die Breite B_{w} sind dabei mit H = 0,3mm und B_{w} = 0,5mm ausgebildet. In Fig. 1 ist die Außenkonturlinie 11 der Vertiefung 9 kreisförmig und konzentrisch zur Spikeachse S ausgebildet.

In anderer, alternativer Ausbildung ist die Außenkonturlinie 11 oval oder eliptisch ausgebildet.

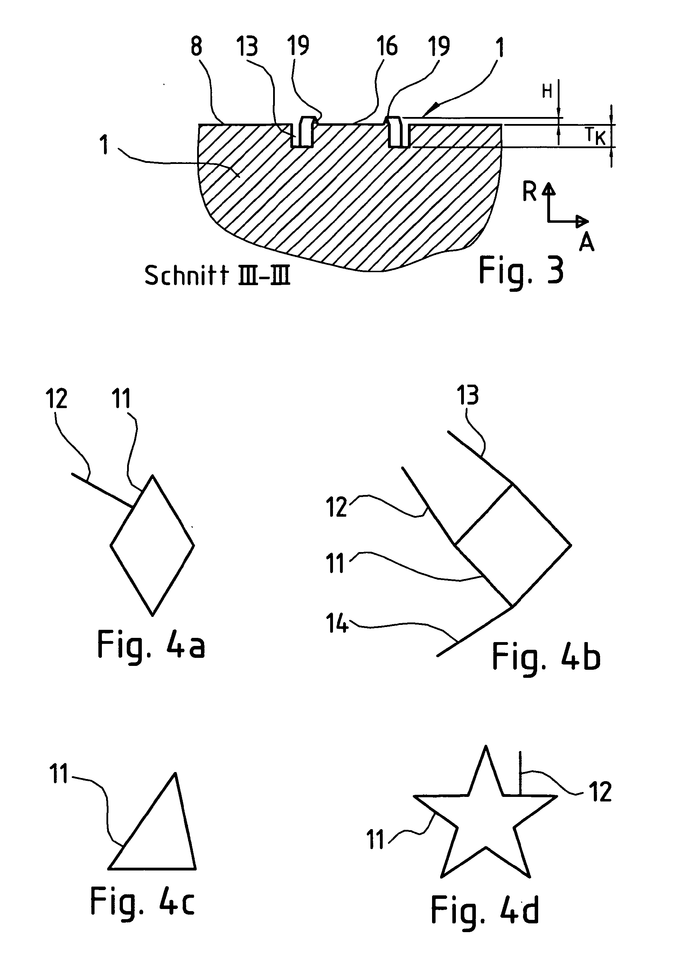

Die Figuren 4a bis 4d zeigen weitere alternative Ausbildungsformen der Außenkonturlinie 11 der Vertiefung mit polygonalem Verlauf. In den Figuren 4a bis 4d ist der Einfachheit halber auf die Darstellung des Spikes und des Profilblockelementes verzichtet und lediglich die Außenkonturlinie 11 der Vertiefung 9 dargestellt. Die Außenkonturlinie ist dabei beispielsweise - wie in Fig. 4a dargestellt - als Raute oder - wie in Fig. 4b dargestellt - als Parallelogramm oder beispielsweise dreieckig - wie in Fig. 4c dargestellt - oder sternförmig mit zickzackförmiger Konturlinie 11 - wie in Fig. 4d dargestellt ist - ausgebildet.

Bei derartigen polygonaler Ausbildung münden Leitkanäle 12 - wie beispielsweise in Fig. 4a und Fig. 4d in vereinfachter Form dargestellt - innerhalb der geradlinigen Strecke zwischen benachbarten Eckpunkten der Außenkonturlinie 11 oder - wie im Ausführungsbeispiel von Fig. 4b gezeigt - in Eckpunkten der polygonalen Struktur in die Vertiefung 9.

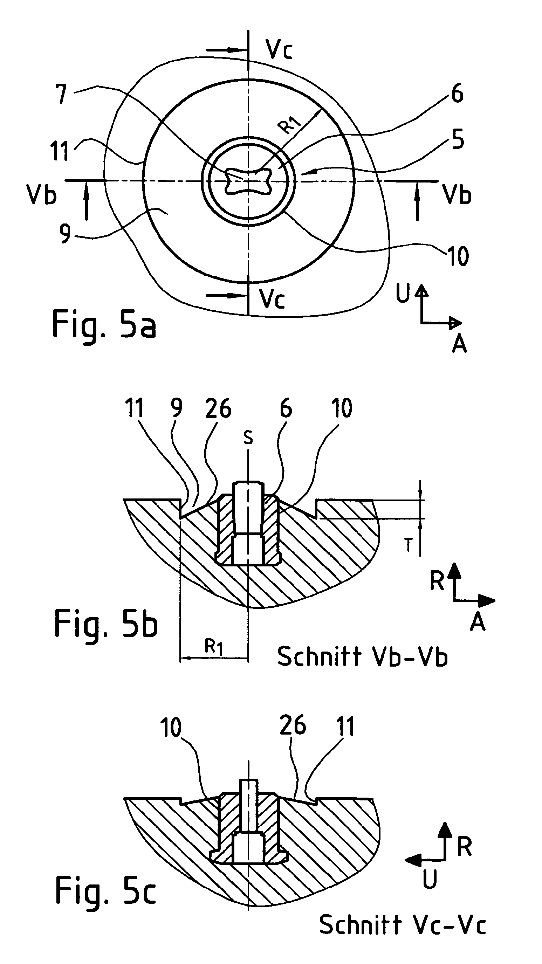

Die Figuren 5a und 5b zeigen ein Ausführungsbeispiel am Beispiel an einer Vertiefung 9 mit kreisförmiger Konturlinie 11, bei dem der die Vertiefung 9 in radialer Richtung R des Fahrzeugluftreifens nach radial innen begrenzende Vertiefungsgrund 26 ausgehend von der die Außenkonturlinie 11 der Vertiefung 9 in radialer Richtung R₁ zur Spikeachse hin gesehen in seiner in radialer Richtung R des Fahrzeugluftreifens gemessenen Position linear ansteigt. Bei der gezeigten Ausführung nimmt die Tiefe T der Vertiefung 9 ausgehend von ihrem Maximalwert an der Außenkontur 11 der Vertiefung bis zum Spikekörper 6 hin kontinuierlich abnimmt.

Die Figuren 5a, 5b und 5c zeigen ein weiteres Ausführungsbeispiel, bei dem zusätzlich die Tiefe T über den Umfang des Spikes sich kontinuierlich verändert. Dabei ist zu erkennen, dass in dem in Umfangsrichtung U des Fahrzeugluftreifens durch die Spikeachse S erfolgten Schnitt, welcher in Fig. 5c dargestellt ist, die maximale an der Außenkontur 11 der Vertiefung 9 gemessene Tiefe T kleiner ist als die in dem in axialer Richtung A des Fahrzeugluftreifens durch die Spikeachse S gebildeten Schnitt, welcher in Fig. 5b dargestellt ist. Längs der Umfangserstreckung der Vertiefung um die Spikeachse S herum ist die Tiefe T jeweils stetig zwischen diesen beiden Extremen verändert ausgebildet.

In anderer, nicht dargestellter Ausführung ist in den Schnittebenen, welche die Spikeachse S beinhalten die minimale Tiefe T der Vertiefung 9 im Bereich der Außenkonturlinie 11 und die maximale Tiefe T an der Mantelfläche des Spikekörpers 6 ausgebildet.

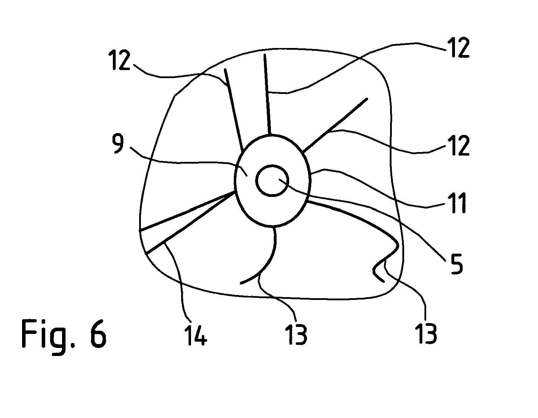

In Fig. 6 ist am Beispiel einer Vertiefung 9 mit ovaler Konturlinie 11 eine Ausbildung dargestellt mit mehreren Leitkanälen 12 und 13 und mit einem Leitkanal 14. Die Leitkanäle 12 sind geradlinig mit konstanter Kanalbreite B_{K..} Die Leitkanäle 13 sind gekrümmt mit konstanter Kanalbreite B_{K} und der Leitkanal 14 ist geradlinig mit ausgehend von der Vertiefung 9 vom Spike weg sich kontinuierlich vergrößernder Kanalbreite B_{K} ausgebildet.

In anderer nicht dargestellter Ausführung ist wenigstens ein Kanal 12 ausgebildet mit kontinuierlich veränderter - z.B. mit kontinuierlich in Richtung vom Spike weg zunehmender - Tiefe T längs seiner Erstreckung.

In der in den Figuren 1 bis 3 dargestellten Ausführung ist Tₖ > T ausgebildet. Mit T_{K} = 0,8mm und T = 0,5 mm.

In einer anderen - nicht dargestellten - Ausführung der in Fig. 1 bis 3 dargestellten Ausführung ist die Tiefe T_{K} der Kanäle 11, 12, 13, 14 gleich groß gewählt wie die Tiefe T der Vertiefung 9, d.h. T = T_{K}.

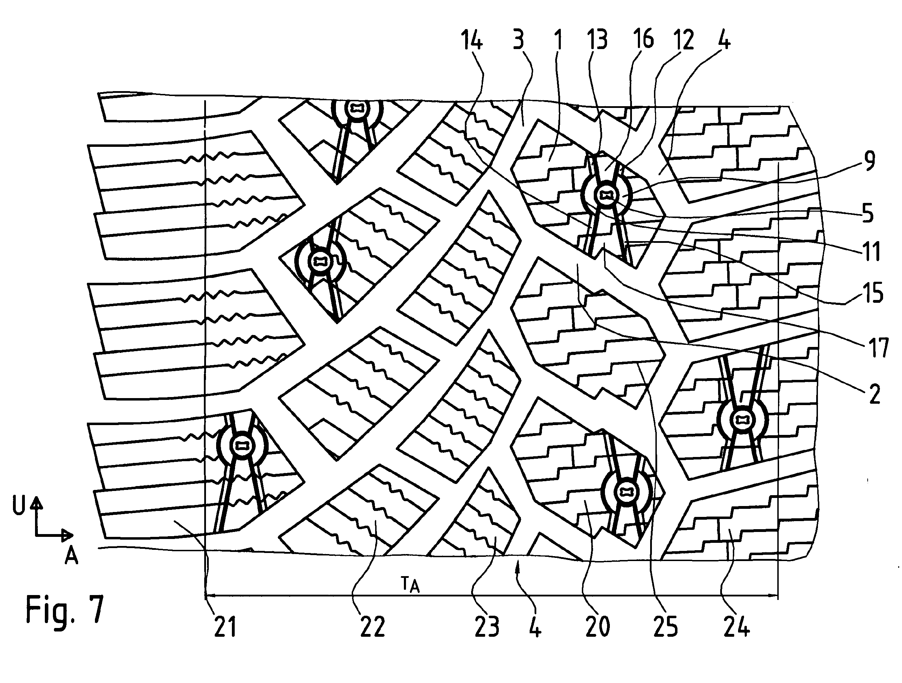

Fig. 7 zeigt den Einsatz einer gemäß Fig. 1 erfolgten Ausbildung mit Spike 5. mit Vertiefung 9, mit Leitkanälen 12, 13, 14 und 15 und mit Dichtlippen 18 und 19 bei Profilblockelementen 1 einer Profilblockreihe 20 eines Laufstreifenprofils mit mehreren in axialer Richtung A eines Fahrzeugluftreifens nebeneinander angeordneten Profilblockreihen 21, 22, 23, 20 und 24, die jeweils durch Umfangsrillen voneinander getrennt ausgebildet sind. Fig. 7 zeigt darüber hinaus ein Ausführungsbeispiel, bei dem auch in weiteren Profilblockreihen 21, 22 und 24 in einzelnen Profilblockelementen derartige Spikes 5 mit Vertiefung 9 und Außenkonturlinie 11 sowie mit Leitkanälen 12, 13, 14 und 15, mit Versteifungsrippen 16 und 17 und mit Dichtlippen 18 und 19 in analoger Weise ausgebildet sind.

Die Profilblockelemente der verschiedenen Profilblockreihen 21, 22, 23, 20 und 24 sind jeweils in bekannter Weise mit Feineinschnitten 25 versehen.

**Bezugszeichenliste (Teil der Beschreibung)**

| | |
|---|---|
| 1 | Profilblockelement |
| 2 | Querrille |
| 3 | Umfangsrille |
| 4 | Umfangsrille |
| 5 | Spike |
| 6 | Spikekörper |
| 7 | Spikestift |
| 8 | Mantelfläche |
| 9 | Vertiefung (Aufnahmereservoir) |
| 10 | Mantelfläche des Spikes |
| 11 | Außenkontur der Vertiefung |
| 12 | Leitkanal |
| 13 | Leitkanal |
| 14 | Leitkanal |
| 15 | Leitkanal |
| 16 | Versteifungsrippe |
| 17 | Versteifungsrippe |
| 18 | Dichtlippe |
| 19 | Dichtlippe |
| 20 | Profilblockreihe |
| 21 | Profilblockreihe |
| 22 | Profilblockreihe |
| 23 | Profilblockreihe |
| 24 | Profilblockreihe |
| 25 | Feineinschnitt |
| 26 | Vertiefungsgrund |

## Patentansprüche

1. Laufstreifenprofil eines Fahrzeugluftreifens mit mehreren durch Rillen (2,3,4) oder Nuten voneinander beabstandeten radial erhabenen Profilelementen (1), die jeweils in radialer Richtung R nach außen durch eine die Bodenkontaktfläche bildende Mantelfläche (8) begrenzt sind, wobei in wenigstens einem Profilelement (1) wenigstens ein Spike (5) ausgebildet ist, der mit seinem Spikekörper (6) im Gummimaterial des Profilelementes (1) verankert ist und mit einer Spikespitze ausgebildet ist, die sich in radialer Richtung R des Reifens aus dem Spikekörper (6) heraus erstreckt und in radialer Position außerhalb der das Profilelement (1) nach radial außen begrenzenden, die Bodenkontaktoberfläche bildenden Mantelfläche (8) des Profilelementes (1) endet,
**dadurch gekennzeichnet,**
**dass** in der das Profilelement (1) nach radial außen begrenzenden, die Bodenkontaktoberfläche bildenden Mantelfläche (8) eine Vertiefung (9) zur Aufnahme von Eis ausgebildet ist, die den Spike (5) im Wesentlichen ringförmig umschließt, **wobei die Vertiefung (9) in der Mantelfläche (8) mit einer die Vertiefung zu der vom Spike (5) wegweisenden Seite begrenzenden Außenkonturlinie (11) und auf der zum Spike (5) hinweisenden Seite durch den Spike (5) begrenzt ist.**

2. Laufstreifenprofil gemäß den Merkmalen von Anspruch 1,
wobei der Spikekörper (6) eine zylinderförmige Mantelfläche (8) mit einem senkrecht zur Zylinderachse ausgebildeten Querschnitt seiner Mantelfläche (8) aufweist, welcher mit einem maximalen Außendurchmesser D mit 5,5mm≤ D≤ 7,5mm ausgebildet ist,
wobei der Spikekörper (6) insbesondere eine kreiszylinderförmige Mantelfläche (8) aufweist.

3. Laufstreifenprofil gemäß den Merkmalen von Anspruch **1oder 2**,
wobei die Vertiefung (9) in der Mantelfläche (8) eine in radialer Richtung R₁ zur Spikeachse S gemessene Breite F aufweist, die über ihre Erstreckung über den Umfang des Spikes (5) hinweg mit 2mm≤F≤10mm ausgebildet ist.

4. Laufstreifenprofil gemäß den Merkmalen von einem oder mehreren der vorangegangenen Ansprüche,
wobei die Vertiefung (9) mit einer in radialer Richtung R des Reifens von der Mantelfläche (8) bis zum Vertiefungsgrund (26) gemessene Tiefe T mit 0,5mm≤T≤1mm ausgebildet ist.

5. Laufstreifenprofil gemäß den Merkmalen von Anspruch **4**,
wobei die Tiefe T der Vertiefung (9) in radialer Richtung R₁ zur Spikeachse S hin stetig -insbesondere linear - zunehmend ausgebildet ist.

6. Laufstreifenprofil gemäß den Merkmalen von einem oder mehreren der vorangegangenen Ansprüche,
wobei die Vertiefung (9) in der Mantelfläche (8) mit einer die Vertiefung (9) zu der vom Spike (5) wegweisenden Seite begrenzenden Außenkonturlinie (11) mit gekrümmtem Verlauf ausgebildet ist.

7. Laufstreifenprofil gemäß den Merkmalen von Anspruch **6,**
wobei die Außenkonturlinie (11) kreisförmig, oval oder elliptisch ausgebildet ist.

8. Laufstreifenprofil gemäß den Merkmalen von einem oder mehreren der Ansprüche 1 bis **5,**
wobei die Vertiefung (9) in der Mantelfläche (8) mit einer die Vertiefung zu der vom Spike (5) wegweisenden Seite begrenzenden Außenkonturlinie (11) mit polygonalem - insbesondere mit sternförmig gezacktem - Verlauf ausgebildet ist.

9. Laufstreifenprofil gemäß den Merkmalen von einem oder mehreren der vorangegangenen Ansprüche,
wobei in der das Profilelement (1) nach radial außen begrenzenden Mantelfläche (8) zusätzlich ein oder mehr kanalförmige Vertiefungen (12,13,14,15) mit einer Breite B_{K} mit 1mm≤ B_{K} ≤ 5mm und mit einer- insbesondere konstanten - Tiefe T_{K} mit 0,5mm≤T_{K} ≤ 1,5mm ausgebildet sind, die von einer Position außerhalb der den Spike (5) ringförmig umschließenden Vertiefung (9) in Richtung zu der den Spike (5) ringförmig umschließenden Vertiefung (9) ausgerichtet verlaufend bis zu der den Spike (5) ringförmig umschließende Vertiefung (9) erstreckt ausgebildet sind.

10. Laufstreifenprofil gemäß den Merkmalen von Anspruch **9,**
wobei das zwischen zwei benachbarten kanalförmigen Vertiefungen (12,13) begrenzte Gummimaterial, das sich in radialer Richtung R des Reifens bis zur Mantelfläche (8) erstreckt, in einer in die den Spike (5) ringförmig umschließende Vertiefung (9) reichende Verlängerung eine radial aus dem Vertiefungsgrund (26) erhabene Rippe (16) bildet, die sich bis zum Spike (5) erstreckt und diesen - insbesondere in Umfangsrichtung U des Reifens - abstützt.

11. Laufstreifenprofil gemäß den Merkmalen von einem oder mehreren der vorangegangenen Ansprüche,
wobei auf der Mantelfläche (8) unmittelbar benachbart zur Vertiefung (9) entlang der Außenkonturlinie (11) eine nach radial außen erstreckte Dichtlippe (18) ausgebildet ist.

12. Laufstreifenprofil gemäß den Merkmalen von Anspruch **10 oder 11,**
wobei auf der Mantelfläche (8) in der radial aus dem Vertiefungsgrund (26) der erhabene Rippe (16) jeweils unmittelbar benachbart zur angrenzenden Vertiefung (9) - und insbesondere in Verlängerung auch zu der begrenzenden kanalförmigen Vertiefung (12 bzw. 13) - entlang der Erstreckung der Rippe (16) eine nach radial außen erstreckte Dichtlippe (19) ausgebildet ist.

## Claims

1. Tread profile of a pneumatic vehicle tire, having a plurality of radially elevated profile elements (1) which are spaced apart from one another by grooves (2, 3, 4) or furrows and which are in each case delimited outward in the radial direction R by an envelope surface (8) which forms the ground contact surface, wherein in at least one profile element (1) there is formed at least one spike (5) which is anchored with its spike body (6) in the rubber material of the profile element (1) and which is formed with a spike tip, which spike tip extends out of the spike body (6) in the radial direction R of the tire and ends at a radial position outside the envelope surface (8), which delimits the profile element (1) radially to the outside and which forms the ground contact surface, of the profile element (1),
**characterized**
**in that**, in the envelope surface (8) which delimits the profile element (1) radially to the outside and which forms the ground contact surface, there is formed a depression (9) which serves for receiving ice and which substantially annularly surrounds the spike (5), wherein the depression (9) in the envelope surface (8) is delimited by an outer contour line (11) which delimits the depression at the side pointing away from the spike (5), and is delimited on the side pointing toward the spike (5) by the spike (5).

2. Tread profile as per the features of Claim 1,
wherein the spike body (6) has a cylindrical envelope surface (8) with a cross section of its envelope surface (8) formed perpendicular to the cylinder axis, which cross section is formed with a maximum outer diameter D of 5.5 mm ≤ D ≤ 7.5 mm, wherein the spike body (6) has in particular a round cylindrical envelope surface (8).

3. Tread profile as per the features of Claim 1 or 2, wherein the depression (9) in the envelope surface (8) has a width F measured in the radial direction R₁ with respect to the spike axis S, the value of said width being 2 mm ≤ F ≤ 10 mm over its extent over the circumference of the spike (5).

4. Tread profile as per the features of one or more of the preceding claims,
wherein the depression (9) is formed with a depth T, measured in the radial direction R of the tire from the envelope surface (8) to the depression base (26), of 0.5 mm ≤ T ≤ 1 mm.

5. Tread profile as per the features of Claim 4,
wherein the depth T of the depression (9) is formed so as to increase continuously - in particular linearly - toward the spike axis S in the radial direction R₁.

6. Tread profile as per the features of one or more of the preceding claims,
wherein the depression (9) in the envelope surface (8) is formed with an outer contour line (11) which delimits the depression (9) at the side pointing away from the spike (5) and which has a curved profile.

7. Tread profile as per the features of Claim 6,
wherein the outer contour line (11) is of circular, oval or elliptical form.

8. Tread profile as per the features of one or more of Claims 1 to 5,
wherein the depression (9) in the envelope surface (8) is formed with an outer contour line (11) which delimits the depression at the side pointing away from the spike (5) and which has a polygonal - in particular star-shaped serrated - profile.

9. Tread profile as per the features of one or more of the preceding claims,
wherein in the envelope surface (8) which delimits the profile element (1) radially to the outside, there are additionally formed one or more channel-like depressions (12, 13, 14, 15) with a width B_{K} of 1 mm ≤ B_{K} ≤ 5 mm and with an - in particular constant - depth T_{K} of 0.5 mm ≤ T_{K} ≤ 1.5 mm, which channel-like depressions are formed so as to run from a position outside the depression (9) annularly surrounding the spike (5) and so as to be aligned in the direction of the depression (9) annularly surrounding the spike (5), and so as to extend as far as the depression (9) annularly surrounding the spike (5).

10. Tread profile as per the features of Claim 9,
wherein the rubber material which is delimited between two adjacent channel-like depressions (12, 13) and which extends in the radial direction R of the tire as far as the envelope surface (8) forms, in an elongation extending into the depression (9) annularly surrounding the spike (5), a rib (16) which is radially elevated from the depression base (26) and which extends as far as the spike (5) and which supports the latter in particular in the circumferential direction U of the tire.

11. Tread profile as per the features of one or more of the preceding claims,
wherein a radially outwardly extending sealing lip (18) is formed on the envelope surface (8) directly adjacent to the depression (9) along the outer contour line (11).

12. Tread profile as per the features of Claim 10 or 11,
wherein, on the envelope surface (8), in the rib (16) which is radially elevated from the depression base (26), a radially outwardly extending sealing lip (19) is formed in each case directly adjacent to the adjoining depression (9) - and in particular also as an elongation of the delimiting channel-like depression (12 or 13) - along the extent of the rib (16).

## Revendications

1. Profilé de bande de roulement d'un pneumatique de véhicule comprenant plusieurs éléments profilés (1) rehaussés radialement, espacés les uns des autres au moyen de gorges (2, 3, 4) ou rainures, lesquels éléments profilés sont limités à chaque fois dans la direction radiale R vers l'extérieur par une surface d'enveloppe (8) formant la surface de contact avec le sol, au moins un élément profilé (1) comprenant au moins un clou (5) qui est ancré avec son corps de clou (6) dans le matériau en caoutchouc de l'élément profilé (1) et qui est réalisé avec une pointe de clou, qui s'étend dans la direction radiale R du pneu hors du corps de clou (6) et qui se termine dans la position radiale en dehors de la surface d'enveloppe (8) de l'élément profilé (1) formant la surface de contact avec le sol, limitant radialement vers l'extérieur l'élément profilé (1),
**caractérisé en ce que**
dans la surface d'enveloppe (8) formant la surface de contact avec le sol, limitant radialement vers l'extérieur l'élément profilé (1), est réalisé un renfoncement (9) pour recevoir de la glace, lequel renfoncement entoure le clou (5) essentiellement de manière annulaire, le renfoncement (9) dans la surface d'enveloppe (8) étant limité par une ligne de contour extérieur (11) limitant le renfoncement vers le côté opposé au clou (5) et par le clou (5) du côté tourné vers le clou (5).

2. Profilé de bande de roulement selon les caractéristiques de la revendication 1,
dans lequel le corps de clou (6) présente une surface d'enveloppe cylindrique (8) avec une section transversale de sa surface d'enveloppe (8) réalisée perpendiculairement à l'axe du cylindre, laquelle est réalisée avec un diamètre extérieur maximal D tel que 5,5 mm ≤ D ≤ 7,5 mm,
le corps de clou (6) présentant notamment une surface d'enveloppe cylindrique circulaire (8).

3. Profilé de bande de roulement selon les caractéristiques de la revendication 1 ou 2,
le renfoncement (9) dans la surface d'enveloppe (8) présentant une largeur F mesurée dans la direction radiale R₁ vers l'axe du clou S, laquelle est réalisée sur son étendue au-delà de la périphérie du clou (5) avec 2 mm ≤ F ≤ 10 mm.

4. Profilé de bande de roulement selon les caractéristiques de l'une ou plusieurs des revendications précédentes,
dans lequel le renfoncement (9) est réalisé avec une profondeur T mesurée dans la direction radiale R du pneu depuis la surface d'enveloppe (8) jusqu'à la base du renfoncement (26) avec 0,5 mm,
T ≤ 1 mm.

5. Profilé de bande de roulement selon les caractéristiques de la revendication 4,
dans lequel la profondeur T du renfoncement (9) dans la direction radiale R₁ vers l'axe du clou S est réalisée de manière à augmenter régulièrement, notamment linéairement.

6. Profilé de bande de roulement selon les caractéristiques de l'une ou plusieurs des revendications précédentes,
dans lequel le renfoncement (9) dans la surface d'enveloppe (8) est réalisé avec une ligne de contour extérieur (11) d'allure courbe limitant le renfoncement (9) vers le côté opposé au clou (5).

7. Profilé de bande de roulement selon les caractéristiques de la revendication 6,
dans lequel le contour extérieur (11) est réalisé sous forme circulaire, ovale ou elliptique.

8. Profilé de bande de roulement selon les caractéristiques de l'une ou plusieurs des revendications 1 à 5,
dans lequel le renfoncement (9) dans la surface d'enveloppe (8) est réalisé avec une ligne de contour extérieur (11) d'allure polygonale, en particulier dentée stellaire, limitant le renfoncement vers le côté opposé au clou (5).

9. Profilé de bande de roulement selon les caractéristiques de l'une ou plusieurs des revendications précédentes,
dans lequel, dans la surface d'enveloppe (8) limitant radialement vers l'extérieur l'élément profilé (1), sont en outre réalisés un ou plusieurs renfoncements en forme de canaux (12, 13, 14, 15) de largeur B_{K} avec 1 mm ≤ B_{K} ≤ 5 mm et avec une profondeur notamment constante T_{K}, telle que 0,5 mm ≤ T_{K} ≤ 1,5 mm, lesquels renfoncements sont réalisés en s'étendant depuis une position à l'extérieur du renfoncement (9) entourant le clou (5) sous forme annulaire dans la direction du renfoncement (9) entourant le clou (5) sous forme annulaire, jusqu'au renfoncement (9) entourant le clou (5) sous forme annulaire.

10. Profilé de bande de roulement selon les caractéristiques de la revendication 9,
dans lequel le matériau en caoutchouc limité entre deux renfoncements adjacents en forme de canaux (12, 13), lequel s'étend dans la direction radiale R du pneu jusqu'à la surface d'enveloppe (8), forme, dans un prolongement s'étendant dans le renfoncement (9) entourant le clou (5) sous forme annulaire, une arête (16) rehaussée radialement depuis la base du renfoncement (26), laquelle arête s'étend jusqu'au clou (5) et supporte celui-ci, notamment dans la direction périphérique U du pneu.

11. Profilé de bande de roulement selon les caractéristiques de l'une ou plusieurs des revendications précédentes,
dans lequel une lèvre d'étanchéité s'étendant radialement vers l'extérieur (18) est réalisée sur la surface d'enveloppe (8) en position directement adjacente au renfoncement (9) le long de la ligne de contour extérieur (11).

12. Profilé de bande de roulement selon les caractéristiques de la revendication 10 ou 11, dans lequel une lèvre d'étanchéité s'étendant radialement vers l'extérieur (19) est réalisée sur la surface d'enveloppe (8) dans l'arête (16) rehaussée radialement depuis la base du renfoncement (26) à chaque fois en position directement adjacente au renfoncement adjacent (9), et en particulier également dans le prolongement du renfoncement en forme de canal adjacent (12, respectivement 13), le long de l'étendue de l'arête (16).
